# EUROPÄISCHE PATENTSCHRIFT

(11) **EP 0 275 920 B1**
(45) Veröffentlichungstag und Bekanntmachung des Hinweises auf die Patenterteilung: **03.11.1993**
(21) Anmeldenummer: 88100399.0
(22) Anmeldetag: 13.01.1988
(51) Int. Cl.: H04B 10/00, H04J 14/00

(54) **Optischer Überlagerungsempfänger mit einer optischen Kopplereinrichtung und einem elektronischen Verstärkerteil**
Heterodyne optical receiver having an optical coupler and an electronic amplifier
Récepteur optique hétérodyne comportant un coupleur optique et un amplificateur électronique

(30) Priorität: 22.01.1987 DE 3701793
(43) Veröffentlichungstag der Anmeldung: 27.07.1988
(73) Patentinhaber: SIEMENS AKTIENGESELLSCHAFT, 80333 München (DE)
(72) Erfinder: Auracher, Franz, Dr., D-8021 Baierbrunn (DE); Berenbrock, Götz, Dipl.-Ing., D-5820 Gevelsberg (DE); Schlemmer, Bernd, Dipl.-Ing., D-5820 Gevelsberg (DE)

(56) Entgegenhaltungen:
- EP-A- 0 251 062
- "OFC'83, PROCEEDINGS OF THE OPTICAL FIBER CONFERENCE", New Orleans, 1983, Seiten 38-40, IEEE, New York, US; D.W. STOWE: "Pasive Quadrature Demodulation for Interferometric Sensors"

## Beschreibung

Die Erfindung betrifft einen optischen Überlagerungsempfänger nach dem Oberbegriff des Patentanspruchs 1.

Ein Empfänger der genannten Art ist beispielsweise aus IEE Colloquium on Advances in Coherent Optic Devices and Technologies, Savoy Place, London, GB, März 1985 und aus ECOC '86, S. 395-398 bekannt. Dort wird jeweils ein optischer ASK-Multiport-Homodynempfänger beschrieben, bei dem die Sende-und Oszillatorsignale über eine optische Kopplereinrichtung in Form eines 3x3-Kopplers zusammengeführt werden, wobei sich an den Ausgängen dieses Kopplers eine unterschiedliche relative Phasenverschiebung der beiden einfallenden Signale ergibt. Die relative Phasendifferenz zwischen den drei aus dem 3x3-Koppler entnehmbaren Mischsignalanteilen muß jeweils 120° betragen und der Koppler ist nicht einfach herzustellen. Die drei Mischsignalanteile werden drei getrennten Verstärkern des elektronischen Verstärkerteils zugeleitet.

Mit sog. 90°-Hybriden können beispielsweise Homodynempfänger (siehe dazu Journ. of Lightwave Technology, LT-3 (1985), S. 1238-1247) und Multiportempfänger (siehe dazu Electron. Lett. 21 (1985) S. 867-868) vorteilhaft aufgebaut werden. Es sind optische Hybride für freie Strahlausbreitung bekannt (siehe dazu AEÜ 37 (1983) S. 203-206), bei denen die 90°-Verschiebung der beiden orthogonalen Feldstärkekomponenten einer zirkular polarisierten Lichtquelle ausgenutzt wird. Bei Überlagerungsempfängern für LWL-Überlagerungssysteme möchte man jedoch alle optischen Komponenten in Wellenleitertechnik ausführen.

Es ist mittlerweile auch ein 90°-Hybrid bekannt geworden (siehe Ed 1 Sti/22.1.1986 dazu D.W. Stowe, Paper TUB 5, OFC-83, (New Orleans)), das mit vier miteinander verbundenen Faserrichtkopplern und einem Phasenschieber realisiert ist.

Aufgabe der Erfindung ist es, einen optischen Überlagerungsempfänger mit einer relativ einfach in integrierter Wellenleitertechnik herstellbaren optischen Kopplereinrichtung anzugeben, bei dem überdies das Amplitudenrauschen des Oszillatorsignals des Lokaloszillators weitgehend unterdrückt wird.

Diese Aufgabe wird durch die im kennzeichnenden Teil des Patentanspruchs 1 angegebenen Merkmale gelöst. Die Kopplereinrichtung des erfindungsgemäßen Empfängers ist ein spezielles 90°-Hybrid, bei dem die Phasenverschiebung zwischen den beiden einen Mischsignalanteilen und die Phasenverschiebung zwischen den beiden anderen Mischsignalanteilen überdies speziell 180° beträgt. Die beiden kompensierenden Verstärker des elektronischen Verstärkerteils bilden einen sog. "balanced receiver" (siehe dazu Journ. of Lightwave Technology, LT-3 (1985) S. 1110-1122). Demgemäß kann der erfindungsgemäße Empfänger im wesentlichen als eine Kombination aus einem optischen 90°-Hybrid mit einem "balanced receiver" angesehen werden, die neuartig ist.

Bei einer vorteilhaften Ausgestaltung des erfindungsgemäßen Empfängers ist ein Stellglied und eine Regeleinrichtung gemäß Anspruch 2 vorgesehen. Bei dieser Ausgestaltung ist die 90°-Phasendifferenz zwischen den beiden einen Mischsignalanteilen und den beiden anderen Mischsignalanteilen an den Ausgangstoren des optischen 90°-Hybrids durch die Nachregelung sicher gewährleistet. Durch entsprechende Wahl der Regeldynamik und Regelgeschwindigkeit lassen sich thermische und mechanische Einflüsse kompensieren.

Eine bevorzugte Ausgestaltung der Regeleinrichtung, welche die Zwischenfrequenz zwischen der Frequenz des Sendesignals und der Frequenz des Lokaloszillatorsignals ausnutzt, ist im Anspruch 3 angegeben.

Das Stellglied ist bevorzugterweise gemäß Anspruch 4 in der Kopplereinrichtung selbst angeordnet.

Zur Synchronisation der Zwischenfrequenz, die unkritisch ist und mit kleiner Nachstellgeschwindigkeit, beispielsweise digital realisiert werden kann, kann das Ausgangssignal eines der beiden kompensierenden Verstärker über ein Bandpaßfilter einem Frequenzdiskriminator zugeführt werden, der den Lokaloszillator in der optischen Frequenz entsprechend einstellt. Eine derartige Vorrichtung ist beispielsweise aus der bereits genannten Literaturstelle IEE Colloquium on Advances in Coherent Optic Devices and Technologies bekannt. Eine spezielle Ausgestaltung des Empfängers nach Anspruch 3 mit einer derartigen Einrichtung ist im Anspruch 5 angegeben.

Eine vorteilhafte konkrete Ausgestaltung der optischen Kopplereinrichtung des erfindungsgemäßen Empfängers ist im Anspruch 6 angegeben. Es sei darauf hingewiesen, daß das aus dem genannten Paper TUB 5, OFC-83 (New Orleans) bekannte faseroptische 90°-Hybrid alle Merkmale der Kopplereinrichtung nach Anspruch 6 aufweist. Bei dem bekannten Hybrid sind sowohl die eingangsseitigen Koppler als auch die ausgangsseitigen Koppler in Form von faseroptischen Richtkopplern ausgebildet. Es wurde erkannt, daß eine Kopplereinrichtung nach Anspruch 6 für den erfindungsgemäßen Empfänger besonders geeignet ist.

Bevorzugte und vorteilhafte Ausgestaltungen dieser Kopplereinrichtung nach Anspruch 6 sind in den Ansprüchen 7 bis 17 angegeben. Insbesondere empfiehlt es sich, die Kopplereinrichtung gemäß Anspruch 13 als integrierte Kopplereinrichtung in Planartechnik zu realisieren, um die in der Struktur dieser Einrichtung einmal definierten optischen Weglängen möglichst genau einzuhalten. Da die Phasenverschiebung von 90° einem Viertel der Wellenlänge des in den Wellenleitern geführten Lichts entspricht, muß die Differenz der optischen Weglängen auf einen kleinen Bruchteil der Wellenlänge eingehalten werden.

Das Einstellen der 90°-Phasendifferenz kann in der Kopplereinrichtung auf verschiedene Weisen erfolgen. Gemäß Anspruch 15 kann die Kopplereinrichtung in einem Substrat aus elektrooptischem oder magnetooptischem Material ausgebildet sein. In diesem Fall kann die 90°-Phasendifferenz über elektrische oder magnetische Felder eingestellt oder verändert werden, wodurch eine neuartige einstellbare Kopplereinrichtung gegeben ist. Dieser Fall ist besonders für die oben erwähnte Nachregelung der Phasendifferenz geeignet. Zweckmäßig ist es dabei, wenn der Phasenschieber gemäß Anspruch 16 aus einem elektrooptischen oder magnetooptischen Phasenmodulator besteht.

Soll die 90°-Phasendifferenz fest eingestellt werden, kann beispielsweise durch Aufbringen oder Wegätzen einer dielektrischen Deckschicht über einem der Wellenleiter die Ausbreitungskonstante des Lichts im darunterliegenden Wellenleiterabschnitt geringfügig so lange verändert werden, daß die gewünschte Phasendifferenz erreicht ist. Prinzipiell könnte auch diese Phasendifferenz durch verschieden lange Wellenleiter erreicht werden, in denen die Ausbreitungskonstante des Lichts gleich ist. In diesen Fällen wäre der Phasenschieber durch die aufgebrachte oder weggeätzte dielektrische Deckschicht oder die Längendifferenz realisiert.

Die Herstellung der Kopplereinrichtung in Planartechnik (Anspruch 13) empfiehlt sich besonders auch deshalb, weil dadurch ein driftarmes und stabiles optisches Hybrid erhalten werden kann. Die Wellenleiter können beispielsweise durch Ionenaustausch in Gläsern (Anspruch 14) oder durch Eindiffusion von Titan in LiNbO₃ herstellt werden.

Die eingangs- und ausgangsseitigen Koppler können Richtkoppler sein (Ansprüche 7 und 10). Anstelle der Richtkoppler können auch x-förmige Überkreuzungen (Ansprüche 9 und 11) eingesetzt werden, wie sie ähnlich aus Journ. of Lightwave Technology, LT-3 (1985) S. 635-642 bekannt sind. Die eingangsseitigen Richtkoppler können auch y-förmige Wellenleiterverzweigungen sein (Anspruch 12).

Je nach Anwendung können die eingangsseitigen Richtkoppler unsymmetrische Teilerverhältnisse haben. Bei den ausgangsseitigen Richtkopplern beträgt das Teilerverhältnis zweckmäßigerweise 1:1 (Anspruch 8), d.h. sie werden zweckmäßigerweise als 3-dB-Koppler ausgeführt.

Im Falle des Homodynempfängers müssen die Teilerverhältnisse der eingangsseitigen Richtkoppler der Kopplereinrichtung entsprechend der Datenrate und dem Phasenrauschen der verwendeten Laser optimiert werden (siehe dazu Journ. of Lightwave Technology, LT-3 (1985), S. 1238-1247).

Bei einem Multiportempfänger soll das Teilerverhältnis der beiden eingangsseitigen Koppler möglichst genau 1:1 betragen (Anspruch 17), d.h. sie sollen als 3-dB-Koppler ausgeführt sein.

Der Phasenschieber in der Kopplereinrichtung nach Anspruch 6 kann zwischen einem beliebigen Ausgangstor eines eingangsseitigen Kopplers und dem zugeordneten Eingangstor des betreffenden ausgangsseitigen Kopplers angeordnet sein.

Der erfindungsgemäße Überlagerungsempfänger kann beispielsweise ein ASK-Multiportempfänger (siehe Anspruch 18), ein PSK-Homodynempfänger (siehe dazu Anspruch 19) oder aber auch ein DPSK-Heterodynempfänger (siehe dazu Anspruch 20) sein.

Die Erfindung wird anhand eines PSK-Homodynempfängers, eines DPSK-Heterodynempfängers und eines ASK-Multiportempfängers, die in den Figuren dargestellt sind, in der folgenden Beschreibung näher erläutert. Von den Figuren zeigen:
- Figur 1: ein Schaltbild eines PSK-Homodynempfängers,
- Figur 2: das Schaltbild eines DPSK-Heterodynempfängers,
- Figur 3: das Schaltbild eines ASK-Multiportempfängers, und
- Figur 4: die Wellenleiterstruktur des in den Figuren 1 bis 3 das Block dargestellten 90°-Hybrids.

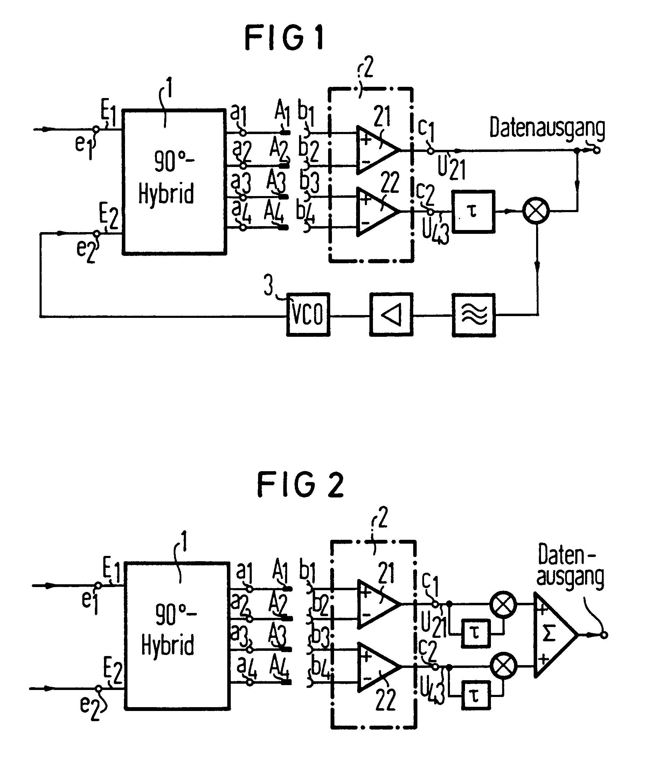

Alle in den Figuren 1 bis 3 dargestellten Empfänger enthalten als wesentlichen Teil das 90°-Hybrid 1 und den elektronischen Verstärkerteil 2 mit den kompensierenden Verstärkern 21 und 22, die als Differenzverstärker ausgebildet sind und gemeinsam den sog. "balanced receiver" bilden. Das Sendesignal E₁ wird über den Eingang e₁ des 90°-Hybrids eingekoppelt, während das Oszillatorsignal E₂ des Lokaloszillators 3 über den anderen Eingang e₂ des Hybrids eingegeben wird.

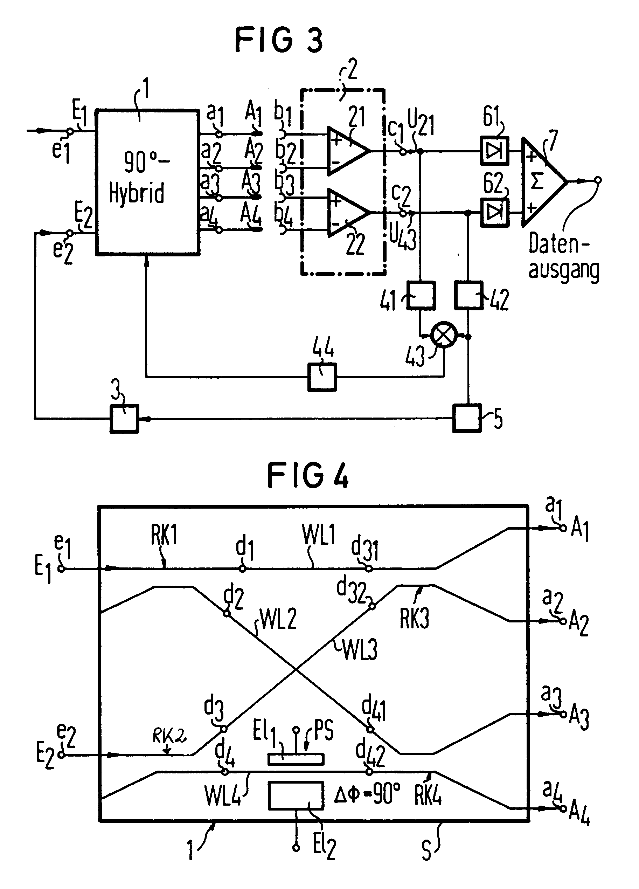

Im Fall des Empfängers nach Figur 1 ist das Sendesignal E₁ ein PSK-Signal. Im Fall der Empfänger nach den Figuren 2 und 3 ist das Sendesignal ein DPSK- bzw. ASK-Signal.

Das 90°-Hybrid arbeitet so, daß in ihm das Sendesignal E₁ und das Oszillatorsignal E₂ in zwei optischen Kopplern gemischt wird und dann von den beiden erzeugten Mischsignalen vier Mischsignalanteile A₁ bis A₄ an den Ausgangstoren a₁ bis a₄ des Hybrids parallel ausgegeben werden, wobei die Mischsignalanteile A₁ und A₂ um 180° und die Mischsignalanteile A₃ und A₄ ebenfalls um 180° gegeneinander phasenverschoben sind. Die beiden Mischsignalanteile A₁ und A₂ sind gegen die beiden Mischsignalanteile A₃ und A₄ um 90° phasenverschoben.

Die vier Mischsignalanteile A₁ bis A₄ werden zugeordneten optoelektrischen Detektoren b₁ bis b₄ zugeleitet und dort in entsprechende elektrische Signale umgewandelt.

Die den Mischsignalanteilen A₁ und A₂ entsprechenden elektrischen Signale werden den beiden Eingängen des Differenzverstärkers 21 zugeleitet, während die den Mischsignalanteilen A₃ und A₄ entsprechenden elektrischen Signale den Differenzeingängen des anderen Differenzverstärkers 22 zugeleitet werden.

Durch diese Anordnung wird erreicht, daß sich die von dem Sendesignal E₁ und Oszillatorsignal E₂ stammenden Gleichstromsignale an den Ausgängen c₁ und c₂ der Verstärker 21 und 22 wegkompensieren und die von Produktthermen der Feldstärken des Sende- und Oszillatorsignals herrührenden ZF-Signale erhalten bleiben und daß die Ausgangssignale U₂₁ bzw. U₄₃ gegeneinander um 90° phasenverschoben sind. Im Fall des Homodynempfängers nach Figur 1 ist außerdem die Kreisfrequenz der ZF-Signale 0.

Bei dem Homodynempfänger nach Figur 1 ist der an die Ausgänge c₁ und c₂ des Verstärkerteils 2, der zum Datenausgang führt und mit einem Eingang des Lokaloszillators 3 verbunden ist, in Aufbau und Funktion aus Journ. of Lightwave Technology, LT-3 (1985) S. 1238-1247 bekannt und es wird daher nicht näher auf ihn eingegangen.

Bei dem DPSK-Heterodynempfänger nach Figur 2 ist der an die Ausgänge c₁ und c₂ des Verstärkersteils 2 angeschlossene Schaltungsteil mit dem Datenausgang aus Electron. Lett. 21 (1985) S. 867-868 in Aufbau und Funktionsweise bekannt, und es wird daher auch in diesem Fall nicht näher darauf eingegangen. Bei dem ASK-Multiportempfänger nach Figur 3 werden die Ausgangssignale U₂₁ und U₄₃ der Verstärker 21 und 22 durch Vollweggleichrichter 61 und 62 gleichgerichtet und dann durch eine Summiereinrichtung 7 aufsummiert. Das so entstandene Signal enthält die vollständige Information des Sendesignals und kann daraufhin demoduliert werden.

Dieser Empfänger enthält außerdem eine Regeleinrichtung, welche die Phasendifferenz zwischen den beiden Ausgangssignalen der beiden kompensierenden Verstärker 21 und 22 und bei einer Abweichung des Istwertes vom Sollwert 90° über einen im 90°-Hybrid angeordneten Phasenmodulator die Phasendifferenz wieder auf den Sollwert regelt.

Das Regelsignal für den optischen Phasenschieber des 90°-Hybrids 1 wird aus den beiden Ausgangssignalen U₂₁ und U₄₃ der Verstärker 21 und 22 erzeugt. Diese Signale werden über die Bandpässe 41 und 42 mit der Mittenfrequenz, welche der Zwischenfrequenz entspricht, dem Multiplizierer 43 zugeführt, dessen Ausgangssignal über das Tiefpaßfilter 44 aufintegriert und dem Phasenschieber zugeführt wird.

Durch diesen Phasenschieber ist das 90°-Hybrid zu einem einstellbaren Hybrid erweitert, bei dem die Phasendifferenz einstellbar ist.

Zur Synchronisation der Zwischenfrequenz wird das Ausgangssignal von einem der beiden Bandpässe 41 und 42, beispielsweise von dem Bandpaß 42 einem Frequenzdiskriminator 5 zugeführt, der den Lokaloszillator 3 entsprechend der optischen Frequenz einstellt.

Den inneren Aufbau des einstellbaren und als 90°-Hybrid für die oben beschriebenen Empfänger geeigneten Hybrids zeigt Figur 4. Auf der in der Zeichenebene liegenden Oberfläche des Substrats S aus beispielsweise LiNbO₃ sind vier optische Richtkoppler RK1 bis RK4 integriert, die durch die Wellenleiter WL1 bis WL4 in bestimmter Weise miteinander verbunden sind. Die Wellenleiter der Richtkoppler und die verbindenden Wellenleiter WL1 bis WL4 sind beispielsweise Ti-diffundierte Streifenwellenleiter.

Die beiden linken Richtkoppler RK1, RK2 bilden die eingangsseitigen Koppler, während die rechtsseitigen Richtkoppler RK3 und RK4 die beiden ausgangsseitigen Koppler des Hybrids bilden.

Von den vier Eingangstoren der linksseitigen Richtkoppler RK1 und RK2 werden nur die beiden Tore e₁ und e₂ benutzt, die anderen nicht.

Beispielsweise ist das eine Ausgangstor d₁ des linksseitigen Richtkopplers RK1 nur mit dem zugeordneten Eingangstor d₃₁ des ausgangsseitigen Richtkopplers RK3 durch den Wellenleiter WL1 verbunden, während das andere Ausgangstor d₂ des eingangsseitigen Richtkopplers RK1 durch den Wellenleiter WL2 nur mit dem Eingangstor d₄₁ des anderen ausgangsseitigen Richtkopplers RK4 verbunden ist.

Ähnlich ist das Ausgangstor d₃ des anderen eingangsseitigen Richtkopplers RK2 durch den Wellenleiter WL3 mit dem zugeordneten Eingangstor d₃₂ des einen ausgangsseitigen Richtkopplers RK3 verbunden, während das andere Ausgangstor d₄ des anderen eingangsseitigen Richtkopplers RK2 durch den Wellenleiter WL4 mit dem zugeordneten Eingangstor d₄₂ des anderen ausgangsseitigen Richtkopplers RK4 verbunden ist.

Es sei darauf hingewiesen, daß die aus Figur 4 hervorgehende Verbindungsart nur ein Beispiel ist. Es könnte auch anders verbunden werden, wichtig ist, daß die vier Ausgangstore d₁ bis d₄ der eingangsseitigen Koppler RK1 und RK2 in umkehrbar eindeutiger Weise den Eingangstoren d₃₁, d₃₂, d₄₁ und d₄₂ zugeordnet sind und daß jeder eingangsseitige Koppler RK1 und RK2 mit den beiden ausgangsseitigen Kopplern RK3 und RK4 verbunden ist.

Die Phase des im Wellenleiter WL4 geführten Lichts läßt sich durch den Phasenmodulator PS beeinflussen, über den die 90°-Phasendifferenz oder auch eine andere Phasendifferenz eingestellt werden kann. Der Modulator PS ist im vorliegenden Fall ein elektrooptischer Modulator und besteht im wesentlichen aus zwei zu beiden Seiten des Wellenleiters WL4 angeordneten und auf das Substrat S aufgebrachten Elektroden El₁ und El₂, über die eine Spannungsdifferenz anlegbar ist. Derartige Modulatoren sind aus der Literatur bekannt.

Der Phasenmodulator PS kann dem Wellenleiter WL4 zugeordnet sein. Er kann so angeordnet sein, daß er die Phase nicht des im Wellenleiter 4 geführten Lichts, sondern die Phase des in einem beliebigen anderen verbindenden Wellenleiter geführten Lichts beeinflußt.

Im Fall des Empfängers mit Phasenregelung kann das Regelsignal einer der beiden Elektroden des Modulators PS, beispielsweise der Elektrode El₁, als Regelspannung zugeführt werden, während die andere Elektrode El₂ auf Masse liegt.

Die Ausgangstore der ausgangsseitigen Koppler RK3 und RK4 bilden die vier Ausgänge a₁ bis a₄ des Hybrids.

## Patentansprüche

1. Optischer Überlagerungsempfänger, insbesondere Heterodyn-, Homodyn- oder Multiportempfänger,
mit einer optischen Kopplereinrichtung (1) zum Mischen eines dem Empfänger zugeführten modulierten Sendesignals (E₁) mit einem Oszillatorsignal (E₂) eines Lokaloszillators (3) des Empfängers,
wobei aus der Kopplereinrichtung (1) mehrere, eine bestimmte relative Phasendifferenz aufweisende Mischsignalanteile (A₁ bis A₄) eines in der Kopplereinrichtung (1) aus Sende- und Oszillatorsignal (E₁, E₂) gemischten Mischsignals parallel entnehmbar sind, und
mit einem elektronischen Verstärkerteil (2), dem die optoelektrisch gewandelten elektrischen Mischsignalanteile (A₁ bis A₄) zugeleitet sind,
**dadurch gekennzeichnet,**
daß die optische Kopplereinrichtung (1) derart ausgebildet ist,
daß aus ihr zwei um 180° gegeneinander phasenverschobene Mischsignalanteile (A₁, A₂) und daneben zwei um 180° gegeneinander und um 90° gegen die beiden einen Mischsignalanteile (A₁, A₂) phasenverschobene Mischsignalanteile (A₃, A₄) parallel entnehmbar sind, und
daß der elektronische Verstärkerteil (2) zwei kompensierende Verstärker (21, 22) aufweist, von denen einem (21) die beiden einen elektrischen Mischsignalanteile (A₁, A₂) und dem anderen (22) die beiden anderen elektrischen Mischsignalanteile (A₃, A₄) zugeleitet sind, wobei die beiden kompensierenden Verstärker (21, 22) derart ausgebildet sind, daß sie zwei elektrische Ausgangssignale (U₂₁, U₄₃) abgeben, in denen Gleichstromanteile die vom Sende- und Oszillatorsignal (E₁, E₂) stammen, fortkompensiert sind, die noch von einem Produkt der Feldstärken des Sende- und Oszillatorsignals herrührende Signalanteile enthalten, und die um 90° gegeneinander phasenverschoben sind.

2. Empfänger nach Anspruch 1, **dadurch gekennzeichnet,** daß die 90°-Phasenverschiebung zwischen den beiden einen Mischsignalanteilen (A₁, A₂) und den beiden anderen Mischsignalanteilen (A₃, A₄) über ein Stellglied (PS) einstellbar ist, und daß eine Regeleinrichtung (41, 42, 43, 44) vorgesehen ist, welche die Phasendifferenz zwischen den beiden Ausgangssignalen (U₂₁, U₄₃) der beiden kompensierenden Verstärker (21, 22) laufend abtastet und bei einer Abweichung des Istwertes vom Sollwert 90° über das Stellglied (PS) die Phasendifferenz wieder auf den Sollwert regelt.

3. Empfänger nach Anspruch 2, **dadurch gekennzeichnet,** daß die Regeleinrichtung (41, 42, 43, 44) eine Multipliziereinrichtung (43) aufweist, der die beiden bandpaßgefilterten Ausgangssignale (U₂₁, U₄₃) zugeleitet sind, und daß ein über ein Tiefpaßfilter (44) aufintegriertes Ausgangssignal der Multipliziereinrichtung (43) dem Stellglied (PS) als Regelgröße zugeleitet ist.

4. Empfänger nach Anspruch 2 oder 3, **dadurch gekennzeichnet,** daß das Stellglied (PS) in der Kopplereinrichtung angeordnet ist.

5. Empfänger nach Anspruch 3 oder 3 und 4, **dadurch gekennzeichnet,** daß das bandpaßgefilterte Ausgangssigal (U₂₁) eines der beiden kompensierenden Verstärker (21) einem Frequenzdiskriminator (5) zugeleitet ist, durch den der Lokaloszillator (3) in der Frequenz einstellbar ist.

6. Empfänger nach einem der vorhergehenden Ansprüche,
**dadurch gekennzeichnet,** daß die Kopplereinrichtung (1) zwei eingangsseitige Koppler (RK1, RK2) mit jeweils einem Eingangstor (e₁, e₂) und jeweils zwei Ausgangstoren (d₁, d₂; d₃, d₄) und zwei ausgangsseitige Koppler (RK3, RK4) mit jeweils zwei Eingangstoren (d₃₁, d₃₂; d₄₁, d₄₂) und jeweils zwei Ausgangstoren (a₁, a₂, a₃, a₄) sowie einen Phasenschieber (PS) aufweist, wobei jedes Ausgangstor (d₁, d₂, d₃, d₄) der beiden eingangsseitigen Koppler (RK1, RK2) mit je einem zugeordneten Eingangstor (d₃₁, d₄₁; d₃₂, d₄₂) der beiden ausgangsseitigen Koppler (RK3, RK4) durch je einen optischen Wellenleiter (WL1, WL2, WL3, WL4) verbunden ist, wobei den beiden Ausgangstoren (d₁, d₂; d₃, d₄) jedes eingangsseitigen Kopplers (RK1, RK2) jeweils Eingangstore (d₃₁, d₄₁; d₃₂, d₄₂) verschiedener ausgangsseitiger Koppler (RK3, RK4) zugeordnet sind, wobei der Phasenschieber (PS) zwischen einem Ausgangstor (d₄) eines eingangseitigen Kopplers (RK2) und dem zugeordneten Eingangstor (d₄₂) des betreffenden ausgangsseitigen Kopplers (RK4) angeordnet ist, wobei das Sendesignal (E₁) dem Eingangstor (e₁) eines eingangsseitigen Kopplers (RK1) und das Oszillatorsignal (E₂) dem Eingangstor (E₂) des anderen eingangsseitigen Kopplers (RK2) zuführbar ist, und wobei die Mischsignalanteile (A₁, A₂, A₃, A₄) den Ausgangstroren (a₁, a₂, a₃, a₄) der beiden ausgangsseitigen Koppler (RK3, RK4) entnehmbar sind.

7. Empfänger nach Anspruch 6, **dadurch gekennzeichnet,** daß ein ausgangsseitiger Koppler (RK3, RK4) in Form eines optischen Richtkopplers ausgebildet ist.

8. Empfänger nach Anspruch 6 oder 7, **dadurch gekennzeichnet,** daß das Teilerverhältnis der beiden ausgangsseitigen Koppler (RK3, RK4) jeweils 1:1 beträgt.

9. Empfänger nach einem der Ansprüche 6 bis 8, **dadurch gekennzeichnet,** daß ein ausgangsseitiger Koppler (RK3, RK4) in Form einer x-förmigen Wellenleiterkreuzung ausgebildet ist.

10. Empfänger nach einem der Ansprüche 6 bis 9, **dadurch gekennzeichnet,** daß ein eingangsseitiger Koppler (RK1, RK2) in Form eines optischen Richtkopplers ausgebildet ist.

11. Empfänger nach einem der Ansprüche 6 bis 10, **dadurch gekennzeichnet,** daß ein eingangsseitiger Koppler (RK1, RK2) in Form einer x-förmigen Wellenleiterkreuzung ausgebildet ist.

12. Empfänger nach einem der Ansprüche 6 bis 11, **dadurch gekennzeichnet,** daß ein eingangsseitiger Koppler (RK1, RK2) in Form einer y-förmigen Wellenleiterverzweigung ausgebildet ist.

13. Empfänger nach einem der Ansprüche 6 bis 12, **dadurch gekennzeichnet,** daß die integrierte Kopplereinrichtung in Planartechnik realisiert ist.

14. Empfänger nach Anspruch 13, **dadurch gekennzeichnet,** daß die Koppler (RK1 bis RK4) und/oder Wellenleiter (WL1 bis WL4) durch Ionenaustausch in einem Substrat (S) aus Glas realisiert sind.

15. Empfänger nach Anspruch 13, **dadurch gekennzeichnet,** daß die Koppler (RK1 bis RK4) und/oder Wellenleiter (WL1 bis WL4) in einem Substrat (S) aus elektrooptischem oder magnetooptischem Material ausgebildet sind.

16. Empfänger nach Anspruch 15 und Anspruch 4, **dadurch gekennzeichnet,** daß der Phasenschieber (PS) aus einem elektrooptischen oder magnetooptischen Phasenmodulator besteht.

17. Empfänger nach einem der Ansprüche 6 bis 16, **dadurch gekennzeichnet,** daß das Teilerverhältnis der beiden eingangsseitigen Koppler (RK1, RK2) jeweils 1:1 beträgt.

18. Empfänger nach einem der vorhergehenden Ansprüche, **dadurch gekennzeichnet,** daß das zugeführte Sendesignal (E₁) ein ASK-Signal ist.

19. Empfänger nach einem der Ansprüche 1 bis 17, insbesondere Homodynempfänger, **dadurch gekennzeichnet** daß das zugeführte Sendesignal ein PSK-Signal ist.

20. Empfänger nach einem der Ansprüche 1 bis 17, insbesondere Heterodynempfänger, daß das zugeführte Sendesignal (E₁) ein PSK-Signal ist.

## Claims

1. Optical beat receiver, especially heterodyne, homodyne or multiport receiver, having an optical coupler device (1) for the mixing of a modulated transmission signal (E₁) fitted to the receiver with an oscillator signal (E₂) of a local oscillator (3) of the receiver, in which a plurality of mixed signal components (A₁ to A₄), exhibiting a specified relative phase difference, of a mixed signal mixed in the coupler device (1) from the transmission signal and oscillator signal E₁, E₂) can be extracted in parallel from the coupler device (1), and having an electronic amplifier part (2), to which the optoelectrically converted electrical mixed signal components (A₁ to A₄) are fed,
characterised in that
the optical coupler device (1) is designed in such a manner that two mixed signal components (A₁, A₂) which are mutually phase-shifted by 180° and, in addition, two mixed signal components (A₃, A₄) which are phase-shifted by 180° relative to one another and by 90° relative to the two first mixed signal components (A₁, A₂), can be extracted in parallel from said optical coupler device (1), and
in that the electronic amplifier part (2) exhibits two compensating amplifiers (21, 22), to one (21) of which the two first electrical mixed signal components (A₁, A₂) are fed and to the other (22) of which the two other electrical mixed signal components (A₃, A₄) are fed, the two compensating amplifiers (21, 22) being designed in such a manner that they emit two electrical output signals (U₂₁, U₄₃), in which direct current components which originate from the transmission signal and oscillator signal (E₁, E₂) are compensated away, which still include signal components originating from a product of the field strengths of the transmission signal and oscillator signal, and which are phase-shifted relative to one another by 90°.

2. Receiver according to Claim 1, characterised in that the 90° phase shift between the two first mixed signal components (A₁, A₂) and the two other mixed signal components (A₃, A₄) can be set by means of a final control element (PS), and in that a regulating device (41, 42, 43, 44) is provided, which continuously samples the phase difference between the two output signals (U₂₁, U₄₃) of the two compensating amplifiers (21, 22) and, in the event of a deviation of the actual value from the theoretical value of 90°, reregulates the phase difference to the theoretical value by means of the final control element (PS).

3. Receiver according to Claim 2, characterised in that the regulating device (41, 42, 43, 44) exhibits a multiplier device (43), to which the two band-pass-filtered output signals (U₂₁, U₄₃) are fed, and in that an output signal of the multiplier device (43), which output signal is integrated by means of a low pass filter (44), is fed to the final control element (PS) as controlled variable.

4. Receiver according to Claim 2 or 3, characterised in that the final control element (PS) is disposed in the coupler device.

5. Receiver according to Claim 3 or 3 and 4, characterised in that the band-pass-filtered output signal (U₂₁) of one of the two compensating amplifiers (21) is fed to a frequency discriminator (5), by which the frequency of the local oscillator (3) can be set.

6. Receiver according to one of the preceding claims, characterised in that the coupler device (1) exhibits two input-side couplers (RK1, RK2) each having one input port (e₁, e₂) and each having two output ports (d₁, d₂; d₃, d₄) and two output-side couplers (RK3, RK4) each having two input ports (d₃₁, d₃₂; d₄₁, d₄₂) and each having two output ports (a₁, a₂, a₃, a₄) as well as a phase shifter (PS), in which each output port (d₁, d₂, d₃, d₄) of the two input-side couplers (RK1, RK2) is connected to a respective associated input port (d₃₁, d₄₁; d₃₂, d₄₂) of the two output-side couplers (RK3, RK4) by a respective optical waveguide (WL1, WL2, WL3, WL4), in which with the two output ports (d₁, d₂; d₃, d₄) of each input-side coupler (RK1, RK2) there are respectively associated input ports (d₃₁, d₄₁; d₃₂, d₄₂) of different output-side couplers (RK3, RK4), in which the phase shifter (PS) is disposed between an output port (d₄) of an input-side coupler (RK2) and the associated input port (d₄₂) of the pertinent output-side coupler (RK4), in which the transmission signal (E₁) can be fed to the input port (e₁) of an input-side coupler (RK1) and the oscillator signal (E₂) can be fed to the input port (E₂) of the other input-side coupler (RK2), and in which the mixed signal components (A₁, A₂, A₃, A₄) can be extracted from the output ports (a₁, a₂, a₃, a₄) of the two output-side couplers (RK3, RK4).

7. Receiver according to Claim 6, characterised in that an output-side coupler (RK3, RK4) is designed in the form of an optical directional coupler.

8. Receiver according to Claim 6 or 7, characterised in that the splitter ratio of the two output-side couplers (RK3, RK4) is in each instance 1:1.

9. Receiver according to one of Claims 6 to 8, characterised in that an output-side coupler (RK3, RK4) is designed in the form of an x-shaped waveguide crossing.

10. Receiver according to one of Claims 6 to 9, characterised in that an input-side coupler (RK1, RK2) is designed in the form of an optical directional coupler.

11. Receiver according to one of Claims 6 to 10, characterised in that an input-side coupler (RK1, RK2) is designed in the form of an x-shaped waveguide crossing.

12. Receiver according to one of Claims 6 to 11, characterised in that an input-side coupler (RK1, RK2) is designed in the form of a y-shaped waveguide branching.

13. Receiver according to one of Claims 6 to 12, characterised in that the integrated coupler device is constructed using planar technology.

14. Receiver according to Claim 13, characterised in that the couplers (RK1 to RK4) and/or waveguides (WL1 to WL4) are constructed by ion exchange in a substrate (S) of glass.

15. Receiver according to Claim 13, characterised in that the couplers (RK1 to RK4) and/or waveguides (WL1 to WL4) are formed in a substrate (S) of electrooptical or magnetooptical material.

16. Receiver according to Claim 15 and Claim 4, characterised in that the phase shifter (PS) comprises an electrooptical or magnetooptical phase modulator.

17. Receiver according to one of Claims 6 to 16, characterised in that the splitter ratio of the two input-side couplers (RK1, RK2) is in each instance 1:1.

18. Receiver according to one of the preceding claims, characterised in that the transmission signal (E₁) fed is an ASK signal.

19. Receiver according to one of Claims 1 to 17, especially homodyne receiver, characterised in that the transmission signal fed is a PSK signal.

20. Receiver according to one of Claims 1 to 17, especially heterodyne receiver, characterised in that the transmission signal (E₁) fed is a PSK signal.

## Revendications

1. Récepteur optique superhétérodyne, notamment récepteur hétérodyne, homodyne ou à portes multiples, comportant un dispositif formant coupleur optique (1) pour mélanger un signal d'émission modulé (E₁), envoyé au récepteur, à un signal (E₂) d'un oscillateur local (3), plusieurs composantes (A₁ à A₄), qui possèdent une différence de phase relative déterminée, d'un signal mixte formé dans le dispositif formant coupleur (1) à partir du signal d'émission et du signal de l'oscillateur (E₁, E₂), pouvant être prélevées en parallèle à partir du dispositif formant coupleur (1), et
comportant une partie formant amplificateur électronique (2), à laquelle sont envoyées les composantes électriques (A₁ à A₄) du signal mixte, qui sont convertis du point de vue opto-électrique,
caractérisé par le fait
que le dispositif formant coupleur optique (1) est agencé de telle sorte que deux composantes réciproquement déphasées de 180° (A₁,A₂) peuvent être prélevées de ce dispositif et qu'à côté de cela, deux composantes (A₃,A₄) du signal mixte, qui sont déphasées de 180° l'une par rapport à l'autre et de 90° par rapport aux deux premières composantes (A₁,A₂) du signal mixte, peuvent être prélevées en parallèle du dispositif formant coupleur, et
que la partie formant amplificateur électronique (2) comporte deux amplificateurs compensateurs (21,22), à l'un (21) desquels sont envoyés les deux premières composantes électriques (A₁,A₂) du signal mixte tandis qu'à l'autre (22) sont envoyées les deux autres composantes électriques (A₃,A₄) du signal mixte, les deux amplificateurs compensateurs (21,22) étant agencés de telle sorte qu'ils délivrent deux signaux électriques de sortie (U₂₁,U₄₃), dans lesquels les composantes de courant continu, qui proviennent du signal d'émission et du signal de l'oscillateur (E₁,E₂), continuent à être compensées, et qui contiennent encore des composantes de signal qui proviennent d'un produit des intensités de champ du signal d'émission et du signal de l'oscillateur et qui sont déphasés réciproquement de 90°.

2. Récepteur suivant la revendication 1, caractérisé par le fait que le déphasage de 90° entre les deux premières composantes (A₁,A₂) et les deux autres composantes (A₃,A₄) du signal mixte est réglable par l'intermédiaire d'un circuit de réglage (PS), et qu'il est prévu un dispositif de réglage (41,42,43,44), qui explore en permanence la différence de phase entre les deux signaux de sortie (U₂₁,U₄₃) des deux amplificateurs compensateurs (21,22) et, dans le cas d'un écart de 90° entre la valeur réelle et la valeur de consigne, règle à nouveau la différence de phase sur la valeur de consigne par l'intermédiaire du circuit de réglage (PS).

3. Récepteur suivant la revendication 2, caractérisé par le fait que le dispositif de réglage (41,42,43,44) comporte un dispositif multiplexeur (43), auquel sont envoyés les deux signaux de sortie (U₂₁,U₄₃), qui sont filtrés selon un filtrage passe-bande, et qu'un signal de sortie, qui est intégré par l'intermédiaire d'un filtre passe-bas (44) du dispositif multiplexeur (43), est envoyé au circuit de réglage (PS) en tant que grandeur de réglage.

4. Récepteur suivant la revendication 2 ou 3, caractérisé par le fait que le circuit de réglage (PS) est disposé dans le dispositif formant coupleur.

5. Récepteur suivant la revendication 3 ou les revendications 3 et 4, caractérisé par le fait que le signal de sortie (U₂₁), filtré selon un filtrage passe-bande, de l'un des deux amplificateurs compensateurs (21) est envoyé à un discriminateur de fréquence (5), au moyen duquel la fréquence de l'oscillateur local (3) est réglable.

6. Récepteur suivant l'une des revendications précédentes, caractérisé par le fait que le dispositif formant coupleur (1) comporte deux coupleurs (RK1,RK2) situés côté entrée et comportant chacun une porte d'entrée (e₁,e₂) et respectivement deux portes de sortie (d₁,d₂; d₃,d₄) et deux coupleurs (RK3,RK4) situés côté sortie et comportant respectivement deux portes d'entrée (d₃₁,d₃₂; d₄₁,d₄₂) et respectivement deux portes de sortie (a₁,a₂,a₃,a₄), ainsi qu'un déphaseur (PS), chaque porte de sortie (d₁,d₂,d₃,d₄) des deux coupleurs (RK1,RK2) situés côté entrée étant raccordée respectivement à une porte d'entrée associée (d₃₁,d₄₁; d₃₂,d₄₂) des deux coupleurs (RK3,RK4) situés côté sortie, respectivement par un guide d'ondes optiques (WL1,WL2,WL3,WL4), tandis que respectivement des portes d'entrée (d₃₁,d₄₁; d₃₂,d₄₂) de différents coupleurs (RK3,RK4) situés côté sortie sont associées aux deux portes de sortie (d₁,d₂;d₃,d₄) de chaque coupleur (RK1,RK2) situé côté entrée, que le déphaseur (PS) est disposé entre une porte de sortie (d₄) d'un coupleur (RK2) situé côté entrée et la porte d'entrée associée (d₄₂) du coupleur considéré (RK4) situé côté sortie, que le signal d'émission (E₁) peut être envoyé à la porte d'entrée (e₁) d'un coupleur (RK1) situé côté entrée et que le signal (E₂) de l'oscillateur peut être envoyé à la porte d'entrée (E₂) de l'autre coupleur (RK4) situé côté entrée, et que les composantes (A₁,A₂,A₃,A₄) du signal mixte peuvent être prélevées sur les portes de sortie (a₁,a₂,a₃,a₄) des deux coupleurs (RK3,RK4) situés côté sortie.

7. Récepteur suivant la revendication 6, caractérisé par le fait qu'un coupleur (RK3,RK4) situé côté sortie est réalisé sous la forme d'un coupleur optique directionnel.

8. Récepteur suivant la revendication 6, caractérisé par le fait que le rapport de division des deux coupleurs (RK3,RK4) situés côté sortie est égal respectivement à 1:1.

9. Récepteur suivant l'une des revendications 6 à 8, caractérisé par le fait qu'un coupleur (RK3,RK4) situé côté sortie est réalisé sous la forme d'un croisement de guides d'ondes en forme de x.

10. Récepteur suivant l'une des revendications 6 à 9, caractérisé par le fait qu'un' coupleur (RK1,RK2) situé côté entrée est réalisé sous la forme d'un coupleur optique directionnel.

11. Récepteur suivant l'une des revendications 6 à 10, caractérisé par le fait qu'un coupleur (RK1,RK2) situé côté entrée est réalisé sous la forme d'un croisement de guides d'ondes en forme de x.

12. Récepteur suivant l'une des revendications 6 à 11, caractérisé par le fait qu'un coupleur (RK1,RK2) situé côté entrée est réalisé sous la forme d'un embranchement de guides d'ondes en forme de y.

13. Récepteur suivant l'une des revendications 6 à 12, caractérisé par le fait que le dispositif de couplage intégré est réalisé selon la technique planar.

14. Récepteur suivant la revendication 14, caractérisé par le fait que les coupleurs (RK1 à RK4) et/ou les guides d'ondes (WL1,WL4) sont réalisés par échange d'ions dans un substrat (S) en verre.

15. Récepteur suivant la revendication 13, caractérisé par le fait que les coupleurs (RK1 à RK4) et/ou les guides d'ondes (WL1 à WL4) sont réalisés dans un substrat (S) formé d'un matériau électro-optique ou magnéto-optique.

16. Récepteur suivant la revendication 13, caractérisé par le fait que le déphaseur (PS) est constitué par un modulateur de phase électro-optique ou magnéto-optique.

17. Récepteur suivant l'une des revendications 6 à 16, caractérisé par le fait que le rapport de division des deux coupleurs (RK1,RK2) situés côté entrée est égal respectivement à 1:1.

18. Récepteur suivant l'une des revendications précédentes, caractérisé par le fait que le signal d'émission envoyé (E₁) est un signal ASK.

19. Récepteur suivant l'une des revendications 1 à 17, notamment récepteur homodyne, caractérisé par le fait que le signal d'émission envoyé est un signal PSK.

20. Récepteur suivant l'une des revendications 1 à 17, notamment récepteur hétérodyne, caractérisé par le fait que le signal d'émission envoyé (E₁) est un signal PSK.
